# FASCICULE DE BREVET EUROPEEN

(11) **EP 3 040 238 B1**
(45) Date de publication et mention de la délivrance du brevet: **11.09.2019**
(21) Numéro de dépôt: 15173466.2
(22) Date de dépôt: 23.06.2015
(51) Int. Cl.: B60Q 1/00, F21S 43/19, F21S 41/19

(54) **DISPOSITIF LUMINEUX POUR VÉHICULE AUTOMOBILE**
LEUCHTVORRICHTUNG FÜR KRAFTFAHRZEUG
LIGHT DEVICE FOR A MOTOR VEHICLE

(30) Priorité: 27.06.2014 FR 1456096
(43) Date de publication de la demande: 06.07.2016
(73) Titulaire: VALEO ILUMINACION, 23600 Martos (ES)
(72) Inventeur: CABANNE, Damien, 23600 MARTOS (ES); AGUILAR DEL MORAL, Jose-Antonio, 23006 JAEN (ES); RODRIGUEZ - FUENTES, Alberto, 23004 JAEN (ES); CASTILLO - JIMENEZ, Jose, 23600 MARTOS (ES)

(56) Documents cités:
- DE-A1- 10 051 626
- DE-A1-102007 040 729
- DE-A1-102011 052 551
- DE-A1-102011 081 062
- GB-A- 2 331 145

## Description

La présente invention a trait au domaine de l'éclairage et/ou de la signalisation d'un véhicule automobile et à la conception des dispositifs lumineux comportant des moyens d'émission de rayons de lumière dirigés vers la sortie du dispositif. Elle concerne plus particulièrement l'agencement de tels dispositifs lumineux pour l'accessibilité aux sources lumineuses.

On connaît de tels dispositifs, dans lesquels les moyens d'émission comportent au moins une diode électroluminescente, que l'on cherche à positionner au foyer d'un collecteur sensiblement elliptique pour que les rayons émis soient dirigés parallèlement à l'axe optique vers un système optique en sortie du dispositif.

Les diodes électroluminescentes présentent entre autres avantages, une durée de vie supérieure à celle que peuvent présenter d'autres types de sources lumineuses. Toutefois, on comprend que pour des raisons diverses, le propriétaire du véhicule puisse avoir besoin de remplacer la diode électroluminescente dans le dispositif.

Que ce soit à l'origine lors de l'assemblage du dispositif lumineux ou dans le cadre d'un remplacement d'une diode défectueuse, le positionnement de la diode doit être très précis, au foyer du collecteur, pour que la qualité de l'éclairage et/ou de la signalisation du véhicule soit optimale.

Le document FR2950129 divulgue un module optique comportant un moyen support d'un collecteur. Le moyen support comporte un logement apte à recevoir un adaptateur sur lequel sont fixées une plaque de circuits imprimés et une diode électroluminescente. Lorsque la diode nécessite d'être changée, il suffit alors de retirer l'adaptateur, de placer une nouvelle diode sur la plaque de circuits imprimés et de replacer l'adaptateur dans le logement.

L'adaptateur est maintenu en place dans deux directions de l'espace par les parois du logement et on prévoit des moyens complémentaires de blocage en position dans la troisième direction de l'espace pour figer la position de l'adaptateur, qui doit être précise pour que la diode portée par l'adaptateur soit positionnée précisément par rapport au premier foyer du collecteur, qui collecte les rayons émis depuis la diode.

Un tel agencement permet une grande précision de positionnement de la source de lumière, mais le dégagement qu'il faut nécessairement laisser pour l'accessibilité à ces moyens complémentaires de blocage en position rend difficile la mise en place de ces modules dans des encombrements de projecteur réduits.

Le document DE 10 2007 040729 A1 divulgue des moyens d'accessibilité à des sources de lumière et de manipulation de celles-ci.

Un problème de la présente invention est de perfectionner ce type de dispositif lumineux pour faciliter les manipulations nécessaires pour le remplacement des moyens d'émission de lumière lorsque ceux-ci sont usagés.

Dans ce contexte, l'invention vise à proposer un dispositif lumineux pour véhicule automobile selon la revendication 1.

Selon différentes caractéristiques, prises seules ou en combinaison, on prévoira que :
- les moyens de fixation sont formés par un ou plusieurs éléments choisi(s) parmi : une vis de serrage, une pince, une agrafe, ou une fixation quart de tour ;
- l'accès additionnel est fermé par une paroi de fermeture venue de matière avec le boîtier, les seconds moyens de fixation n'étant accessibles qu'après séparation de la paroi du boitier, notamment par sectionnement. Cela permet d'avoir un boîtier avec un nombre limité d'accès à la production. Au cours de l'exploitation du dispositif lumineux, s'il est nécessaire de changer les moyens d'émission de lumière, cette paroi de fermeture pourra être sectionnée, pour laisser l'accès aux seconds moyens de fixation. Une fois ôtée, le boîtier pourra être alors fermé par un capot additionnel, par exemple livré avec les moyens d'émission de lumière de remplacement ;
- l'accès additionnel est en vis-à-vis des seconds moyens de fixation ;
- la paroi de fermeture est formée sur une face du boîtier distincte de la face du boîtier sur laquelle est formé ledit orifice principal ;
- l'accès additionnel est formé par un alésage réalisé dans le boîtier de manière à être disposé au droit des seconds moyens de fixation ; notamment, ledit accès additionnel peut être formé sur une face du boîtier distincte de la face du boîtier sur laquelle est formé ledit orifice principal ;
- l'alésage de l'accès additionnel s'étend selon un axe sensiblement perpendiculaire audit premier axe de l'orifice principal ;
- l'accès additionnel comporte un couvercle retenu au boîtier par des moyens sécables et recouvrant l'alésage, notamment avant la première utilisation desdits moyens sécables. Il s'agit ici de la configuration avant le premier remplacement des moyens d'émission de lumière. Ce couvercle correspond notamment à la paroi de fermeture venue de matière avec le boîtier précédemment décrite, les seconds moyens de fixation n'étant accessibles qu'après séparation de la paroi du boitier, notamment par sectionnement.
- les moyens sécables peuvent alors consister en la présence d'un pourtour frangible, apte à être déchiré à la première utilisation des moyens sécables ;
- le couvercle comporte des moyens de préhension pour le dégagement dudit couvercle après déchirement des moyens sécables ;
- des moyens de retenue sont prévus dans l'alésage de l'accès additionnel, lesdits moyens de retenue étant aptes à coopérer avec des moyens complémentaires portés par un capuchon amovible dimensionné pour venir en recouvrement de l'accès additionnel après le retrait dudit couvercle sécable. Les moyens de retenue peuvent être de type à baïonnette. On peut prévoir que le dispositif lumineux comprenne à l'origine, en lieu et place du couvercle sécable, un capuchon amovible en caoutchouc, le capuchon et l'alésage permettant une fixation de type fixation à baïonnette ;
- un fourreau venu de matière avec le boîtier s'étend en saillie dudit boîtier en entourant l'accès additionnel ;
- l'orifice principal permet le passage de deux éléments modulaires interchangeables porteurs chacun de moyens d'émission de lumière distincts, et le boîtier comporte deux accès additionnels distincts et respectivement associés à l'un des éléments modulaires interchangeables.

Le dispositif lumineux tel qu'il a été décrit précédemment peut être un projecteur pour l'éclairage et/ou la signalisation du véhicule automobile, notamment un projecteur de véhicule, encore appelé phare.

L'invention concerne également un procédé de remplacement de moyens d'émission de lumière d'un tel dispositif lumineux de véhicule automobile, dans lequel on réalise successivement différentes étapes parmi lesquelles une étape de dégagement d'un orifice principal disposé sur une première face d'un boîtier dudit dispositif par retrait d'un capot recouvrant ledit orifice, une étape de découpe des moyens sécables associés à un couvercle recouvrant un accès additionnel disposé sur une deuxième face dudit boîtier, une étape de retrait des moyens de fixation disposés en regard de l'accès additionnel, une étape d'extraction des moyens d'émission de lumière à remplacer par l'orifice principal, une étape de replacement dans le boîtier des moyens d'émission de lumière de remplacement, une étape de fixation des moyens d'émission dans le dispositif par serrage des moyens de fixation au niveau des accès additionnels, une étape de placement des capuchons amovibles dans les accès additionnels, et une étape de fixation du capot en couverture de l'orifice principal.

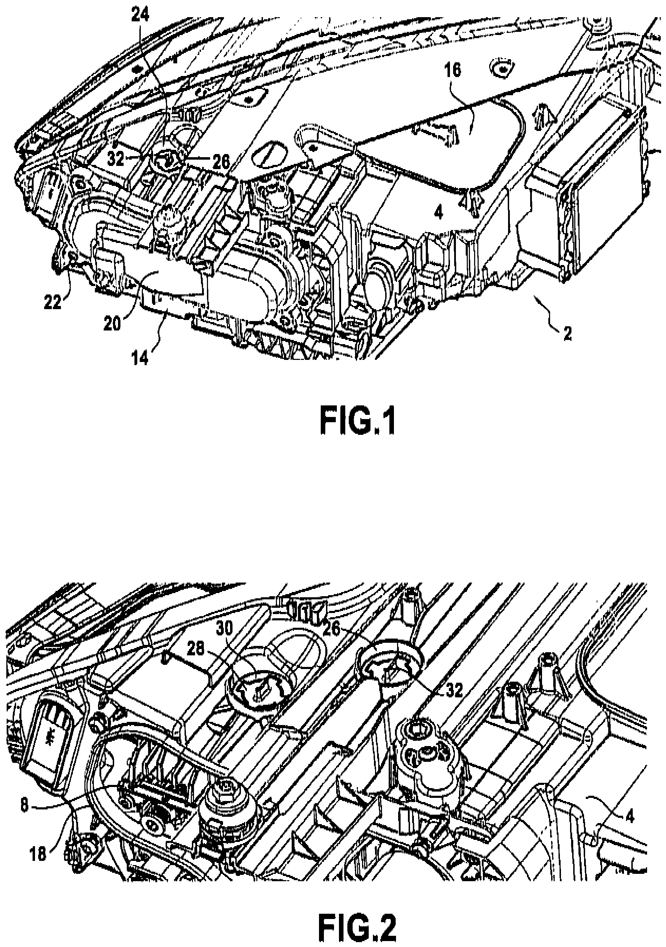

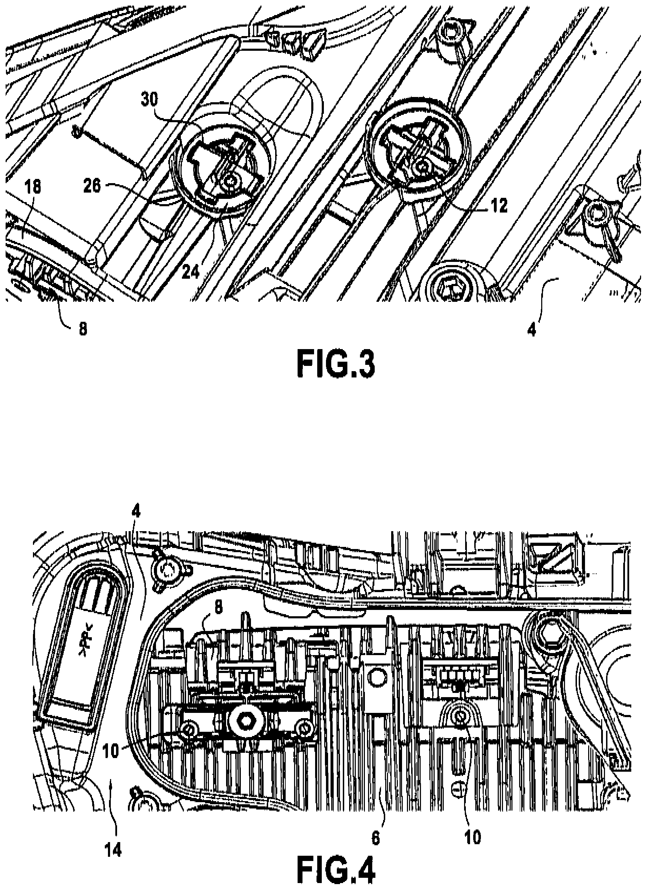

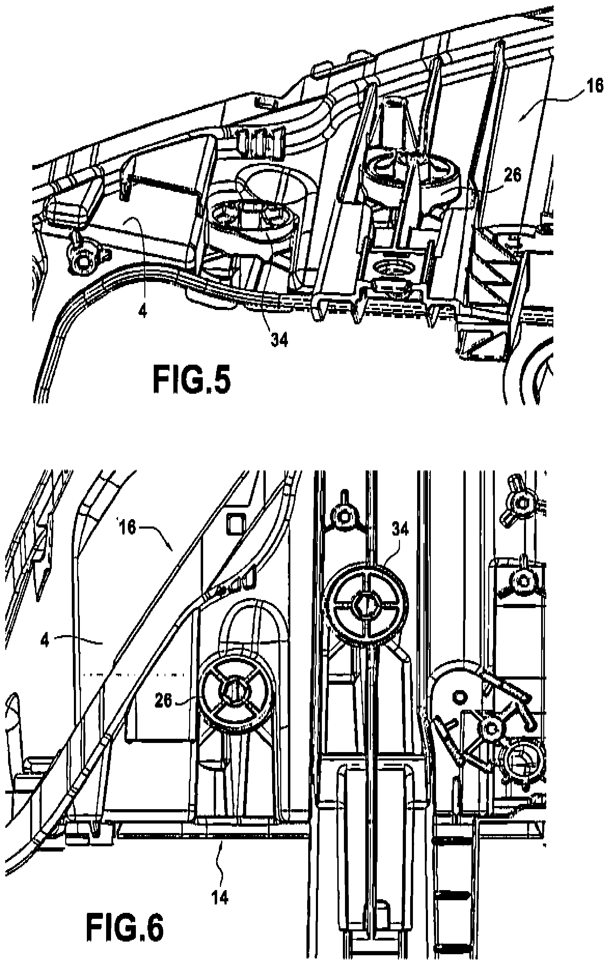

D'autres caractéristiques et avantages de l'invention apparaîtront à la lecture de la description détaillée d'un mode de réalisation qui va suivre et pour la compréhension de laquelle on se reportera aux figures annexées qui représentent chacune un même dispositif lumineux vu sous plusieurs angles et à plusieurs étapes successives du procédé de remplacement selon l'invention. Parmi ces figures :- la figure 1 est une vue en perspective, de trois quart arrière, d'un boîtier du dispositif lumineux, à une étape initiale du procédé de remplacement dans laquelle un capot est monté sur une face arrière du boîtier du dispositif pour couvrir un orifice principal et au moins un couvercle sécable est monté sur une face supérieure du boîtier pour couvrir un accès additionnel ;- la figure 2 est une vue de détail de la figure 1, ciblée sur la face arrière du boîtier du dispositif, à une deuxième étape du procédé de remplacement dans laquelle on a retiré le couvercle ;- la figure 3 est une vue de détail de la figure 1, ciblée sur la face supérieure du boîtier du dispositif, à une troisième étape du procédé de remplacement dans laquelle on a retiré le couvercle sécable pour avoir accès à des seconds moyens de fixation des moyens d'émission de lumière dans le boîtier du dispositif ;- la figure 4 est une vue de la face arrière du boîtier du dispositif, à une quatrième étape du procédé de remplacement dans laquelle on retire les premiers moyens de fixation des moyens d'émission de lumière dans le boîtier du dispositif ;- la figure 5 est une vue en perspective de trois quart arrière, dans laquelle on a représenté seulement le boitier pour plus de clarté, à une cinquième étape du procédé de remplacement dans laquelle on a placé des capuchons amovibles dans les accès additionnels formés sur la face supérieure du boîtier ;
- et la figure 6 est une vue de dessus du boîtier de la figure 5.

Dans ce qui suit, on désignera par direction longitudinale L la direction dans le sens de circulation du véhicule automobile, et par direction transversale T une direction horizontale et perpendiculaire à cette direction longitudinale. La direction verticale V désignera la direction perpendiculaire aux deux précédentes, qui définissent par ailleurs un plan horizontal. Le trièdre L,V,T est placé sur les figures pour faciliter la lecture. Mais on comprendra que le dispositif lumineux peut être agencé selon une autre orientation sans sortir du contexte de l'invention.

Tel qu'illustré sur les figures, un dispositif lumineux 2 comporte un boîtier 4 dans lequel des moyens d'émission de lumière sont aptes à émettre des rayons de lumière en direction de moyens de déviation optique également logés dans le boîtier.

Les moyens de déviation optique présentent une surface réfléchissante sensiblement elliptique de sorte qu'elle présente deux foyers et qu'elle est apte à dévier des rayons émis par les moyens d'émission de lumière disposés au premier foyer vers un système optique disposé au second foyer correspondant.

Les moyens de déviation optique sont portés par un moyen support 6 qui forme également des moyens d'échange thermique. On comprendra que l'invention vise à protéger des moyens prévus sur le boîtier pour faciliter la manipulation des moyens d'émission de lumière et que dans ce contexte, il a été choisi, pour illustrer la description, des figures sur lesquelles les moyens de déviation optique ne sont pas visibles.

Les moyens d'émission de lumière comportent une diode électroluminescente et une plaque de circuits imprimés. Ils comportent en outre, dans l'exemple illustré, un adaptateur, formé par un élément modulaire interchangeable 8, apte à être retenu dans un logement formé dans le moyen support, de manière à ce que l'élément modulaire soit correctement positionné pour que la diode associée soit disposée au premier foyer des moyens de déviation optique.

Le logement présente sensiblement une forme de cuvette avec une paroi de fond qui s'étend au-dessus de la surface de déviation optique. Cette paroi de fond est trouée et la face de l'élément modulaire porteuse de la diode est tournée vers la paroi de fond lorsque l'élément modulaire est en place dans le logement. La diode peut ainsi émettre des rayons à travers cette paroi de fond en direction des moyens de déviation optique. Le logement comporte trois parois montantes qui se raccordent perpendiculairement à la paroi de fond, parmi lesquelles deux parois latérales s'étendent longitudinalement et une paroi avant s'étend transversalement, de sorte que le logement est ouvert sur la face opposée à la paroi de fond, ainsi que sur un des côtés, opposé à la paroi avant du logement, à l'arrière du dispositif.

L'élément modulaire est inséré par le côté ouvert du logement à l'arrière. Lors de cette insertion, l'élément modulaire est bloqué transversalement par les parois latérales du logement, jusqu'à venir en butée contre la paroi avant du logement.

On prévoit selon l'invention de fixer l'élément modulaire interchangeable dans le dispositif, en le rendant solidaire du moyen support par l'intermédiaire de différents moyens de fixation, formés ici par des vis. Des premiers moyens de fixation 10 permettent de maintenir l'élément modulaire en position dans la direction d'insertion et d'extraction des moyens d'émission de lumière dans le boîtier, tandis que des seconds moyens de fixation 12 permettent de plaquer l'élément modulaire contre la paroi de fond du logement.

Les premiers moyens de fixation comportent au moins une vis qui s'étend axialement dans la direction d'insertion et d'extraction des moyens d'émission de lumière, tandis que les seconds moyens de fixation comportent au moins une vis qui s'étend selon un axe sensiblement perpendiculaire à la direction d'insertion et d'extraction des moyens d'émission de lumière.

Le boîtier présente une face avant qui forme la face de sortie du dispositif par laquelle les rayons lumineux sortent, une face arrière opposée 14, deux faces latérales, une face supérieure 16 et une face inférieure et le boîtier comporte au moins deux zones distinctes d'accès à l'élément modulaire interchangeable.

Une première zone d'accès consiste en un orifice principal 18 disposé sur la face arrière, par lequel l'élément modulaire est apte à être inséré et retiré selon un premier axe correspondant à la direction générale d'extraction. L'orifice principal est formé à l'origine sur le boîtier et il est recouvert par un capot rigide 20 dès que l'ensemble des composants du dispositif lumineux est inséré dans le boîtier. Le capot rigide est classiquement rendu solidaire du boîtier par des vis de serrage 22 en prise dans des alésages taraudés formés dans l'épaisseur du boîtier autour de l'orifice principal.

Une deuxième zone d'accès consiste en un accès additionnel 24, disposé sur une autre face du boîtier, avantageusement la face supérieure.

L'accès additionnel prend la forme d'un alésage qui s'étend selon un axe perpendiculaire au premier axe de l'orifice principal et donc à la direction générale d'extraction. L'alésage de l'accès additionnel est disposé au droit de la vis formant les seconds moyens de fixation 12 de l'élément modulaire sur le boîtier.

Tel qu'illustré sur les figures, l'accès additionnel comporte un fourreau 26 venu de matière avec le boîtier et qui s'étend en saillie de la face supérieure du boîtier. A l'intérieur de ce fourreau, le boîtier forme un couvercle sécable 28 qui recouvre l'alésage avant la première utilisation.

Le couvercle est sécable en ce qu'il est retenu à la face supérieure du boîtier par une bande frangible 30, que l'utilisateur peut découper avec un outil coupant pour détacher le couvercle du boîtier. Le couvercle comporte en outre des moyens de préhension 32 pour retenir le couvercle et l'empêcher de tomber à l'intérieur du boîtier lorsque la bande frangible est découpée.

L'accès additionnel est ainsi recouvert avant une première utilisation par un couvercle sécable, venu de matière avec la face supérieure du boîtier et, tel que cela sera expliqué plus en détail ci-après, il est apte à être recouvert après la première utilisation par un capuchon amovible 34.

Dans l'exemple illustré, le capuchon amovible est un bloc de caoutchouc apte à être inséré dans l'alésage et présentant sur sa face supérieure un moyen de préhension pour permettre son retrait de l'alésage si nécessaire.

On comprendra que sans sortir du contexte de l'invention, on pourra prévoir que le capuchon amovible soit directement monté dans l'alésage de l'accès additionnel avant la première utilisation, le capuchon amovible jouant alors le rôle de couvercle sécable. Le capuchon et l'alésage peuvent permettre une fixation de type fixation à baïonnette.

Des moyens de retenue 36 sont prévus à proximité de l'accès additionnel, pour coopérer avec des moyens complémentaires portés par le capuchon amovible. Dans le mode de réalisation illustré, les moyens de retenue sont de type à baïonnette, formés par quatre encoches axiales réalisées dans l'épaisseur de la face supérieure du boîtier, diamétralement opposées deux à deux sur le pourtour de l'alésage de l'accès additionnel. On observe que la bande frangible suit dans ce cas le contour des encoches pour qu'à l'origine le couvercle sécable recouvre l'intégralité de l'alésage de l'accès additionnel. On comprendra que les moyens de retenue pourraient être différents et prendre par exemple la forme d'un filetage externe sur l'extrémité de la paroi cylindrique du fourreau.

Dans le mode de réalisation illustré sur les figures, le dispositif comporte deux éléments modulaires additionnels aptes à être disposés chacun dans un logement formé dans le moyen support des moyens de déviation optique. Chaque élément modulaire est porteur d'une diode distincte et un élément modulaire peut être remplacé tandis que l'autre élément modulaire reste en place. On prévoit alors deux accès additionnels, respectivement associés à l'un des éléments modulaires interchangeables, chacun de ces accès étant agencé selon un axe perpendiculaire à la direction d'extraction et d'insertion des moyens d'émission de lumière. On comprend que si les deux accès additionnels peuvent être formés sur la même face du boitier, on peut sans sortir du contexte de l'invention prévoir des accès additionnels formés sur des faces différentes dès lors que la condition selon laquelle les accès additionnels sont distincts de l'orifice principal est respectée. Là encore, on prévoit avantageusement de disposer les accès additionnels sur la face supérieure du boîtier, de manière à ce que l'accès aux vis de serrage se fasse verticalement, ce qui a pour effet de faciliter les opérations de vissage.

Dans la présente description, la face arrière s'étend verticalement et la direction d'extraction et d'insertion des moyens d'émission de lumière est sensiblement longitudinale selon le trièdre L, V, T utilisé, tandis que l'axe selon lequel s'étend les accès additionnels est sensiblement vertical. On comprend que les orientations ici choisies pourraient être modifiées sans sortir du contexte de l'invention dès lors que l'agencement général du dispositif est conforme à ce que qui a été décrit avec les axes d'orientation des accès additionnels qui sont distincts, éventuellement perpendiculaires, de l'axe d'orientation de l'orifice principal.

On va maintenant décrire plus en détails le procédé de remplacement d'une diode défectueuse dans un dispositif 2 tel que décrit précédemment, la diode étant portée par un élément modulaire interchangeable 8.

Dans un premier temps, on retire le capot rigide 20 recouvrant l'orifice principal 18 par dévissage des vis de fixation, de manière à avoir accès, par la face arrière 14 du boîtier 4, à l'élément modulaire interchangeable à retirer, c'est-à-dire celui qui porte la diode défectueuse.

On découpe ensuite le couvercle sécable 28 disposé sur la face supérieure 16 du boîtier en sortie de l'accès additionnel 24 qui correspond à l'élément modulaire interchangeable à retirer. A cet effet, on utilise par exemple un cutter pour couper les zones frangibles 30 et on dégage l'accès additionnel en tirant le couvercle par son moyen de préhension 32. On pourra envisager qu'il n'est pas nécessaire de couper au cutter les zones frangibles et que celles-ci sont dimensionnées pour céder dès lors que l'opérateur exerce un effort de traction par le moyen de préhension du couvercle.

On a ainsi accès aux seconds moyens de fixation 12 qui retiennent l'élément modulaire interchangeable au boîtier du dispositif, et que l'on peut alors désengager du boîtier dans une étape suivante. Ici, on dévisse ces seconds moyens de fixation et on les retire dans la direction selon laquelle s'étendent les accès additionnels.

On peut alors retirer l'élément modulaire interchangeable et les moyens d'émission de lumière associés par l'orifice principal, dans la direction générale d'extraction et d'insertion telle qu'elle a été présentée précédemment, après avoir dévissé les premiers moyens de fixation 10 qui retenaient l'élément modulaire interchangeable au moyen support 6.

On procède ensuite au remplacement des moyens d'émission de lumière défectueux, soit en changeant complètement l'élément modulaire, soit en remplaçant uniquement la diode portée par cet élément modulaire, et on replace l'élément modulaire interchangeable dans le logement correspondant formé dans le moyen support logé dans le boîtier.

On cherche alors à bloquer en position l'élément modulaire interchangeable par rapport au dispositif, et on passe pour cela les moyens de vissage par les accès additionnels pour visser les seconds moyens de fixation 12 sur le moyen support 6.

Pour l'étanchéité du dispositif, une fois que les seconds moyens de fixation sont en place et correctement serrés, on place un capuchon amovible 34 dans l'accès additionnel dont le couvercle sécable a été préalablement retiré dans une étape précédente. Le capuchon est bloqué en position dans le fourreau délimitant l'accès additionnel, notamment par un quart de tour grâce auquel les moyens de retenue 36, à baïonnette, portés de façon complémentaire par le boîtier au niveau de l'accès additionnel ainsi que par le capuchon, réalisent le blocage.

On replace enfin le capot sur l'orifice principal, et on le visse.

La description qui précède explique clairement comment l'invention permet d'atteindre les objectifs qu'elle s'est fixés et notamment de proposer un dispositif lumineux qui permette un remplacement rapide et précis des moyens d'émission de lumière qu'il comporte. Ces objectifs sont notamment atteint par la réalisation de deux zones d'accès distinctes à ces moyens d'émission de lumière, parmi lesquelles une zone d'accès, l'orifice principal, sert au retrait des moyens d'émission de lumière tandis que l'autre zone d'accès, l'accès additionnel, sert au retrait des moyens de fixation de ces moyens d'émission de lumière.

On peut ainsi avoir un dispositif lumineux dans lequel des moyens de fixation des moyens d'émission de lumière sont agencés sur des faces distinctes du boîtier du dispositif, ce qui permet une meilleure fixation des moyens d'émission de lumière dans les trois dimensions de l'espace, sans qu'il soit pour autant nécessaire de prévoir à cet effet un boîtier trop volumineux pour permettre le serrage de ces moyens de fixation.

Bien entendu, diverses modifications peuvent être apportées par l'homme du métier aux structures du dispositif lumineux, qui viennent d'être décrites à titre d'exemples non limitatifs. A titre d'exemple, on pourra prévoir dans une variante de réalisation non représentée, que les moyens de fixation et notamment les seconds moyens de fixation ne soient pas des vis de serrage.

## Revendications

1. Dispositif lumineux pour véhicule automobile, comportant un boîtier (4) dans lequel sont disposés au moins des moyens d'émission de lumière et des moyens de déviation optique aptes à dévier les rayons lumineux émis vers une face de sortie du dispositif, ledit dispositif comprenant en outre un orifice principal (18) formé dans le boîtier pour l'extraction des moyens d'émission de lumière hors du boîtier selon un premier axe,
le dispositif étant **caractérisé en ce que** les moyens d'émission de lumière sont portés par un élément modulaire interchangeable (8), fixé dans le dispositif par rapport aux moyens de déviation optique par l'intermédiaire de moyens de fixation (10,12), ledit élément modulaire interchangeable étant dimensionné pour passer à travers de l'orifice principal (18),
et **en ce que** lesdits moyens de fixation comportent des premiers moyens de fixation (10) qui permettent de maintenir l'élément modulaire (8) en position dans le boîtier (4) selon le premier axe, et des seconds moyens de fixation (12) qui permettent de plaquer l'élément modulaire selon un axe distinct du premier axe, au moins un accès additionnel (24) distinct de l'orifice principal étant prévu dans le boîtier pour accéder auxdits seconds moyens de fixation.

2. Dispositif lumineux selon la revendication précédente, **caractérisé en ce que** l'accès additionnel (24) est en vis-à-vis desdits seconds moyens de fixation (12).

3. Dispositif lumineux selon les revendications 1 ou 2, **caractérisé en ce que** l'accès additionnel (24) comporte un couvercle formé par un capuchon amovible (34), notamment en caoutchouc.

4. Dispositif lumineux selon l'une des revendications 1-2, **caractérisé en ce que** l'accès additionnel (24) est fermé par une paroi de fermeture venue de matière avec le boîtier, les seconds moyens de fixation (12) n'étant accessibles qu'après séparation de la paroi du boitier, notamment par sectionnement.

5. Dispositif lumineux selon la revendication précédente, **caractérisé en ce que** la paroi de fermeture est formée sur une face (16) du boîtier distinct de la face (14) du boîtier sur laquelle est formé ledit orifice principal (18).

6. Dispositif lumineux selon l'une des revendications 1-2, **caractérisé en ce que** l'accès additionnel (24) est formé par un alésage réalisé dans le boîtier (4) de manière à être disposé au droit des seconds moyens de fixation (12).

7. Dispositif lumineux selon la revendication précédente, **caractérisé en ce que** l'accès additionnel (24) comporte un couvercle (28) retenu au boîtier par des moyens sécables (30) et recouvrant l'alésage.

8. Dispositif lumineux selon la revendication précédente, **caractérisé en ce que** lesdits moyens sécables consistent en la présence d'un pourtour frangible (30), apte à être déchiré à la première utilisation des moyens sécables.

9. Dispositif lumineux selon la revendication précédente, **caractérisé en ce que** le couvercle (28) comporte des moyens de préhension (32) pour le dégagement dudit couvercle après déchirement des moyens sécables (30).

10. Dispositif lumineux selon la revendication 8 ou 9, **caractérisé en ce que** des moyens de retenue (36) sont prévus dans l'alésage de l'accès additionnel, lesdits moyens de retenue étant aptes à coopérer avec des moyens complémentaires portés par un capuchon amovible (34) dimensionné pour venir en recouvrement de l'accès additionnel (24) après le retrait dudit couvercle sécable (28).

11. Dispositif lumineux selon l'une des revendications précédentes, **caractérisé en ce qu'**un fourreau (26) venu de matière avec le boîtier (4) s'étend en saillie dudit boîtier en entourant l'accès additionnel (24).

12. Dispositif lumineux selon l'une des revendications précédentes, ledit dispositif lumineux étant un projecteur de véhicule automobile.

13. Procédé de remplacement de moyens d'émission de lumière d'un dispositif lumineux de véhicule automobile selon la revendication 1, dans lequel :
- on dégage un orifice principal (18) disposé sur une première face (14) d'un boîtier (4) dudit dispositif par retrait d'un capot (20) recouvrant ledit orifice ;
- on découpe des moyens sécables (30) associés à un couvercle (28) recouvrant un accès additionnel (24) disposé sur une deuxième face (16) dudit boîtier ;
- on retire des deuxièmes moyens de fixation (12) disposés en regard de l'accès additionnel par l'accès additionnel ;
- on extrait un élément modulaire interchangeable (8) portant les moyens d'émission de lumière à remplacer par l'orifice principal une fois l'élément modulaire interchangeable n'est plus maintenu par des premiers éléments de fixation ;
- on replace dans le boîtier l'élément modulaire interchangeable ;
- on maintient cet élément modulaire interchangeable en position dans le boîtier (4) avec les premiers moyens de fixation et on fixe cet élément modulaire interchangeable dans le dispositif par serrage des deuxièmes moyens de fixation au niveau de l'accès additionnel ;
- on place des capuchons amovibles (34) dans les accès additionnels ;
- et on fixe le capot en couverture de l'orifice principal.

## Patentansprüche

1. Beleuchtungsvorrichtung für ein Kraftfahrzeug, umfassend ein Gehäuse (4), in dem mindestens lichtemittierende Mittel und optische Ablenkmittel angeordnet sind, die in der Lage sind, die in Richtung einer Ausgangsfläche der Vorrichtung emittierten Lichtstrahlen abzulenken, wobei die Vorrichtung ferner eine im Gehäuse ausgebildete Hauptöffnung (18) zum Herausziehen der lichtemittierenden Mittel aus dem Gehäuse entlang einer ersten Achse umfasst, **dadurch gekennzeichnet, dass** die lichtemittierenden Mittel von einem austauschbaren Modulelement (8) getragen werden, das in der Vorrichtung in Bezug auf den Reflektor durch Befestigungsmittel (10) befestigt ist, 12), wobei das austauschbare modulare Element so bemessen ist, dass es durch die Hauptöffnung (18) hindurchgehen kann, und dadurch, dass die Befestigungsmittel erste Befestigungsmittel (10) umfassen, die das modulare Element (8) in Position im Gehäuse (4) entlang der ersten Achse halten, und zweite Befestigungsmittel (12), die das modulare Element entlang einer von der ersten Achse verschiedenen Achse drücken, wobei mindestens ein zusätzlicher Zugang (24), der von der Hauptöffnung verschieden ist, zum Zugriff auf die zweiten Befestigungsmittel vorgesehen ist.

2. Beleuchtungsvorrichtung nach Anspruch 1, **dadurch gekennzeichnet, dass** der zusätzliche Zugang (24) den zweiten Befestigungsmitteln (12) zugewandt ist.

3. Beleuchtungsvorrichtung nach Anspruch 1 oder 2, **dadurch gekennzeichnet, dass** der zusätzliche Zugang (24) eine Abdeckung umfasst, die durch einen abnehmbaren Verschluss (34), insbesondere aus Gummi, gebildet ist.

4. Beleuchtungsvorrichtung nach Anspruch 1 oder 2, **dadurch gekennzeichnet, dass** der zusätzliche Zugang (24) durch eine als integraler Bestandteil des Gehäuses ausgebildete Abschlusswand geschlossen ist, wobei die zweiten Befestigungsmittel (12) zugänglich sind, bis die Wand vom Gehäuse gelöst ist, insbesondere durch Trennen.

5. Beleuchtungsvorrichtung nach einem der vorstehenden Ansprüche, **dadurch gekennzeichnet, dass** die Verschlusswand auf einer Fläche (16) des Gehäuses ausgebildet ist, die sich von der Fläche (14) des Gehäuses unterscheidet, an der die Hauptöffnung (18) ausgebildet ist.

6. Beleuchtungsvorrichtung nach einem der vorstehenden Ansprüche, **dadurch gekennzeichnet, dass** der zusätzliche Zugang (24) aus einer Bohrung im Gehäuse (4) so ausgebildet ist, dass er in Übereinstimmung mit den Befestigungsmitteln (12) positioniert ist.

7. Beleuchtungsvorrichtung nach einem der vorstehenden Ansprüche, **dadurch gekennzeichnet, dass** der zusätzliche Zugang (24) eine Abdeckung (28) umfasst, die am Gehäuse mit trennbaren Mitteln (30) gehalten wird und die Bohrung abdeckt.

8. Beleuchtungsvorrichtung nach Anspruch 7, **dadurch gekennzeichnet, dass** die teilbaren Mittel aus dem Vorhandensein eines zerbrechlichen Umfangs (30) bestehen, der bei der ersten Verwendung der teilbaren Mittel zerrissen werden kann.

9. Beleuchtungsvorrichtung nach Anspruch 8, **dadurch gekennzeichnet, dass** die Abdeckung (28) Mittel (32) zum Greifen umfasst, um die Abdeckung nach dem Zerreißen der trennbaren Mittel (30) zu entfernen.

10. Beleuchtungsvorrichtung nach Anspruch 8 oder 9, **dadurch gekennzeichnet, dass** in der Bohrung des zusätzlichen Zugangs Haltemittel (36) vorgesehen sind, wobei die Haltemittel mit komplementären Mitteln zusammenarbeiten können, die von einem abnehmbaren Verschluss (34) getragen werden, der so bemessen ist, dass er den zusätzlichen Zugang (24) abdeckt, nachdem die teilbare Abdeckung (28) entfernt wurde.

11. Beleuchtungsvorrichtung nach einem der vorstehenden Ansprüche, **dadurch gekennzeichnet, dass** eine als integraler Bestandteil des Gehäuses (4) ausgebildete Hülse (26) aus dem Gehäuse ragt und den zusätzlichen Zugang (24) umgibt.

12. Beleuchtungsvorrichtung nach einem der vorstehenden Ansprüche, wobei die Beleuchtungsvorrichtung ein Kfz-Scheinwerfer ist....

13. Verfahren zum Ersetzen von lichtemittierenden Mitteln einer Kraftfahrzeugbeleuchtungsvorrichtung, wobei das Verfahren:
- eine Hauptöffnung (18), die auf einer ersten Fläche (14) eines Gehäuses (4) der Vorrichtung angeordnet ist, durch Entfernen einer Kappe (20), die die Öffnung abdeckt, freigelegt wird;
- trennbaren Mitteln (30), die einer Abdeckung (28) zugeordnet sind, die einen zusätzlichen Zugang (24) abdeckt, der auf einer zweiten Fläche (16) des Gehäuses angeordnet ist, geschnitten werden;
- Befestigungsmittel (12), die dem zusätzlichen Zugang gegenüber angeordnet sind, entfernt werden;
- die zu ersetzenden lichtemittierenden Mittel werden durch die Hauptöffnung abgesaugt;
- Ersatz-Leuchtmittel werden im Gehäuse neu positioniert;
- diese Emissionsmittel werden in der Vorrichtung durch Anziehen von Befestigungsmitteln an zusätzlichen Zugängen befestigt;
- entfernbare Verschlüsse (34) sind in den zusätzlichen Zugängen angeordnet;
- und die Kappe ist fixiert, um die Hauptöffnung abzudecken.

## Claims

1. Lighting device for a motor vehicle, comprising a housing (4) in which are arranged at least light-emitting means and optical-deflection means able to deflect the rays of light emitted toward an output face of the device, said device further comprising a main orifice (18) formed in the housing for extracting the light emitting means from the housing along a first axis, the device being **characterized in that** the light-emitting means are borne by an interchangeable modular element (8), fixed in the device with respect to the reflector by fastening means (10,12), said interchangeable modular element being sized so that it can pass through the main orifice (18), and **in that** said fastening means comprise first fastening means (10) that hold the modular element (8) in position in the housing (4) along the first axis, and second fastening means (12) which press the modular element along an axis distinct from the first axis, at least one additional access (24) distinct from the main orifice being provided for accessing said second fastening means.

2. Lighting device according to claim 1, **characterized in that** the additional access (24) faces said second fastening means (12).

3. Lighting device according to claim 1 or 2, **characterized in that** the additional access (24) comprises a cover formed by a removable closure (34), notably made of rubber.

4. Lighting device according to claim 1 or 2, **characterized in that** the additional access (24) is closed by a closing wall formed as an integral part of the housing, the second fastening means (12) being accessible until the wall has been detached from housing, notably by severing.

5. Lighting device according to one of the preceding claims, **characterized in that** the closure wall is formed on a face (16) of the housing that is distinct from the face (14) of the housing on which said main orifice (18) is formed.

6. Lighting device according to one of the preceding claims, **characterized in that** the additional access (24) is formed of a bore made in the housing (4) in such a way as to be positioned in line with the fastening means (12).

7. Lighting device according to one of the preceding claims, **characterized in that** the additional access (24) comprises a cover (28) held on the housing by severable means (30) and covering the bore.

8. Lighting device according to claim 7, **characterized in that** said severable means consist of the presence of a frangible periphery (30) that can be torn on first use of the severable means.

9. Lighting device according to claim 8, **characterized in that** the cover (28) comprises means (32) for grasping in order to clear said cover away after the severable means (30) have been torn.

10. Lighting device according to claim 8 or 9, **characterized in that** retaining means (36) are provided in the bore of the additional access, said retaining means being able to collaborate with complementary means borne by a removable closure (34) dimensioned to cover the additional access (24) after said severable cover (28) has been removed.

11. Lighting device according to one of the preceding claims, **characterized in that** a sleeve (26) formed as an integral part of the housing (4) projects from said housing and surrounds the additional access (24).

12. Lighting device according to one of the preceding claims, said lighting device being a motor vehicle headlamp..

13. Method for replacing light-emitting means of a motor vehicle lighting device, in which method:
- a main orifice (18) arranged on a first face (14) of a housing (4) of said device is uncovered by removing a cap (20) covering said orifice;
- severable means (30) associated with a cover (28) covering an additional access (24) arranged on a second face (16) of said housing are cut;
- fastening means (12) arranged opposite the additional access are removed;
- the light-emitting means that are to be replaced are extracted through the main orifice;
- replacement light-emitting means are repositioned in the housing;
- these emitting means are fixed in the device by tightening fastening means at additional accesses;
- removable closures (34) are placed in the additional accesses;
- and the cap is fixed in place to cover the main orifice.
